# EUROPEAN PATENT SPECIFICATION

(11) **EP 4 281 295 B1**
(45) Date of publication and mention of the grant of the patent: **26.08.2026**
(21) Application number: 22704096.1
(22) Date of filing: 21.01.2022
(51) Int. Cl.: B60B 35/12, B60C 23/00

(54) **DEVICE FOR TRANSMITTING COMPRESSED AIR OR CONTROL AND/OR WORKING PRESSURES IN A CARDAN SHAFT ARRANGEMENT**
VORRICHTUNG ZUR ÜBERTRAGUNG VON DRUCKLUFT BZW. STEUER- UND/ODER ARBEITSDRÜCKEN IN EINER KARDANWELLENANORDNUNG
DISPOSITIF DE TRANSMISSION D'AIR COMPRIMÉ OU DE PRESSIONS DE COMMANDE ET/OU DE TRAVAIL DANS UN AGENCEMENT D'ARBRE À CARDAN

(30) Priority: 21.01.2021 DE 102021101246
(43) Date of publication of application: 29.11.2023
(73) Proprietor: Illinois Tool Works Inc., Glenview IL 60025 (US); KT Projektentwicklungs GmbH, 74072 Heilbronn (DE)
(72) Inventor: TSIBERIDIS, Konstantin, 74076 Heilbronn (DE); SPINDLER, Martin, Glenview, IL 60025 (US)
(74) Representative: Meissner Bolte Partnerschaft mbB
(86) International application number: PCT/US2022/013280
(87) International publication number: WO 2022/159680

(56) References cited:
- WO-A1-2017/089915
- DE-A1- 102014 003 597
- US-A- 2 908 241

## Description

The present invention relates generally to systems for transmitting pressurized media, in particular compressed air, or control and/or working pressures, in particular in a drive shaft having a rotatably supported vehicle tire.

According to aspects of the invention, it relates in particular to a rotational transmission device for transmitting control and/or working pressures or pressurized media, for example compressed air, to a fluid duct received or formed at least in regions in the interior of a shaft, in particular a drive shaft.

According to further aspects, the invention relates to a system having such a rotational transmission device and a shaft on or at which the rotational transmission device is mounted, wherein the shaft is in particular embodied as a drive shaft of a vehicle.

The invention furthermore relates to a tire pressure adjustment system for at least one wheel, driven rotationally relative to a vehicle body, of a wheeled vehicle having pneumatic tires and comprising at least one drive shaft for driving the wheel, wherein a fluid duct is received or formed in the interior of the drive shaft, and wherein at least one rotational transmission device is provided for supplying and/or discharging a pressurized fluid to or from the fluid duct received or formed in the drive shaft, as needed.

The document WO 2017/089915 A1 relates to an on-board centralized system for regulating the pressure of the tyres of a motor-vehicle. DE 10 2014 003597 A1 discloses a cardan shaft arrangement comprising a flexible fluid line.

Vehicle tires are typically filled with compressed air. Filling with other pressurized media is also conceivable, for example with nitrogen. Vehicle tires in the sense of the present disclosure can be, for example, tubed or tubeless tires. Vehicle tires are used in passenger vehicles, buses, commercial vehicles, and also in aircraft, for example.

Conventional vehicle tires are typically supplied with a pressurized media via external connections, i.e., with compressed air or with a nitrogen filling. Standard valves are commonly used for this purpose. Depending on the respective usage and operating conditions, vehicle tires typically have one optimal operating/filling pressure. For example, for land vehicles such as cars, buses, and trucks, there are operating pressures or pressure ranges that can ensure the most optimum possible rolling resistance, lateral guidance, longitudinal guidance, heat generation, and/or wear behavior.

For example, an existing actual pressure in a tire can fluctuate within certain limits as a function of the ambient or operating temperature. Furthermore, in the long term, a certain pressure drop, such as a so-called "creeping" pressure drop, often cannot be entirely avoided.

Systems for vehicles are known that permit monitoring of the operating/filling pressure in tires. These can be so-called active or passive systems. For example, passive systems can be designed in order to determine and compare the rolling circumferences of the tires of one axle. If significant differences are found, this indicates that there are pressure differences in the respective tires. Active systems for measuring and/or monitoring compressed air typically include sensors for pressure sensing that are integrated in a wheel assembly. Such pressure sensors can be configured, for example, in order to transmit corresponding pressure signals wirelessly or wired from the (rotating) tire to fixed components of the vehicle.

Furthermore, systems have generally become known that enable a self-sufficient adjustment of the filling pressure of vehicle tires. Such systems can be found in off-road vehicles, military vehicles, and similar special purpose vehicles, for example. The systems can, in principle, be configured in order to allow for an adjustment of the filling pressure in the idling state of the vehicle, i.e., when the vehicle is not moving.

Known systems for self-sufficient pressure regulation in vehicles have a central structure. In other words, this means that there is only one device for supplying the pressurized media for filling the tires. It is also conceivable to provide a few devices for supplying the pressurized media, for example in a combination of a tractor machine and a trailer or semitrailer. Nevertheless, such a central supply device for compressed air is provided for filling a plurality of wheel assemblies, in particular on different axles or shafts.

For this purpose, the central compressed air/pressurized media supply unit is coupled to a plurality of wheel assemblies. Thus, the supply unit is usually mounted on the chassis side or on the body side or on the coachwork side of the vehicle. The supply unit can include, for example, a compressor or air compressor.

Starting from the supply unit, it is now necessary to lay a plurality of compressed air or pressurized media lines to the individual wheel assemblies. In doing so, a plurality of so-called rotary lead-throughs for the pressurized media lines must be regularly provided. This is due to the fact that the tires of the wheel assemblies are typically rotatably received on axles of the vehicle.

By contrast to rotational transmission devices, which serve to transmit control and/or working pressures or corresponding pressurized media from a fixed axle to a wheel assembly rotating relative to the axle, rotational transmission devices for transmitting control and/or working pressures or for transmitting pressurized media to a rotating shaft, in particular a drive shaft, of a vehicle present particular challenges, because only a particularly small design space for the reception or integration of such rotational transmission devices is available. This is particularly true for drive shafts that are provided with an articulated head in order to balance movements corresponding to a steering motion.

Typically, a rotary lead-through for transmitting control and/or working pressures or for transmitting pressurized media comprises a stator ring and a rotor ring, which are annularly installed, for example outside an axle body of the shaft. A rotary lead-through within the axle body has thus far been associated with high production costs and significant risks. This is true, for example, in off-road vehicles with all-wheel drive and external planetary gear trains. A failure of the rotary lead-through within the axle body would result in air entry into the axle housing, and the oil of the axle gear train could leak out of the gear train vent.

In order to increase the service life of the rotary lead-throughs and the operational safety of the tire pressure adjustment system, the tire pressure adjustment systems are increasingly being equipped with special switching valves on the wheels, which load the rotary lead-throughs with air pressure only during the adjustment process. Nevertheless, the service life of the rotary lead-throughs with larger diameters and conventional seals is to be assessed very critically, because, with increasingly large diameters, in addition to the sliding speeds the frictional torques in particular increase sharply.

In particular, in cases where the rotary lead-through or rotational transmission device is associated with a cardan shaft, there is a specific weakness in the transition area in the articulated head of the cardan shaft.

The fluid duct, which is received or formed in the cardan shaft and is in particular loaded with pressurized media, in particular with compressed air or control and/or working pressures with the aid of the rotational transmission device or rotary lead-through, as needed, is subjected to increased stresses in the area of the articulated head of the cardan shaft, because the articulated head connects a first, transmission-side cardan shaft section of the cardan shaft to a second, wheel-side cardan shaft section, and the fluid duct is subjected to increased stresses during operation of the vehicle, in particular during steering movements, due to the possible relative movement between the wheel-side cardan shaft section and the transmission-side cardan shaft section.

In light of this, the invention is based upon the underlying problem of - in particular in the case of a tire pressure adjustment system comprising a rotational transmission device for transmitting a pressurized medium, such as compressed air or control and/or working pressures, to a fluid duct received or formed in a cardan shaft - optimizing said system in order for it to be characterized by a high level of robustness.

In particular, the entire system is designed to be characterized by low wear propensity and pronounced longevity.

The present invention relates to a cardan shaft arrangement of a vehicle axle as defined by independent claim 1, wherein further developments of the inventive cardan shaft arrangement are defined in the sub-claims, respectively.

The arrangement according to the independent claim 1 is proposed in order to ensure above all that, in a pressure adjustment system for at least one wheel, which is driven in a rotating manner relative to a vehicle body, of a wheeled vehicle with pneumatic tires, in which a fluid duct is received or formed in the interior of a cardan shaft, the fluid duct, in particular in the articulated head of the cardan shaft, is as resistant to wear as possible during operation of the vehicle.

The arrangement comprises a device for transmitting compressed air or pressurized media or control and/or working pressures between a first fluid duct received or formed at least in regions in the interior of a first, transmission-side cardan shaft section and a second fluid duct, which is received or formed at least in regions in the interior of a second, wheel-side cardan shaft section which is connected in an articulated manner to an end region of the first cardan shaft section.

The compressed air/pressure transmission device is characterized in particular in that it comprises a line section that is in fluidic connection with the first and the second fluid ducts or can be brought into fluidic connection, the length of which can be reversibly changed.

By this measure, it can be effectively achieved that, during operation of the vehicle, the fluid duct section passing through the articulated head of the cardan shaft can equalize any fluctuations in the distance between the first and the second fluid duct.

For the implementation of the line section that serves to fluidly connect the first fluid duct in the transmission-side cardan shaft section in the wheel-side cardan shaft section, the line section comprises a tubular or hose-like hollow body constructed from at least two coaxially and preferably mutually concentrically formed hollow body sections that are slidable in a telescope-like manner relative to one another in order to thus reversibly change the length of the line section. In this context, it can in particular also be provided that the at least two hollow body sections are biased in a resting position with the help of at least one biasing element.

According to the invention, the line section has a tubular or hose-like hollow body which runs at least in regions along a screw-like or helical line. This embodiment is characterized by its simple yet robust construction. In addition, this embodiment is particularly space-savingly integratable in the articulated head of the cardan shaft.

Alternatively, the inventive arrangement is characterized in that the tubular or hose-like hollow body runs at least in regions along a helical line.

According to the invention, the tubular or hose-like hollow body of the line section has a first end region, which preferably runs at least substantially rectilinear. Furthermore, the tubular or hose-like hollow body has an opposite second end region, which also preferably also runs at least substantially straight. The tubular or hose-like hollow body is configured (reversibly) in a flexible manner such that the second end region of the tubular or hose-like hollow body is at least in regions offset and/or steerable relative to the first end region by providing, for example, a region in which the tubular or hose-like hollow body runs along a helical or helical line.

By this measure, the fluid transmission device in the region of the articulated head of the hinged shaft is designed to be as insensitive to relative movements as possible between the first, transmission-side cardan shaft section and the second, transmission-side hinged shaft section.

In the neutral position of the tubular or hose-like hollow body, i.e., in a state in which the first and second end regions of the tubular or hose-like hollow body are not offset from one another and are not deflected from one another, a longitudinal axis of the first end region of the hollow body is arranged concentrically to a longitudinal axis of the second end region of the hollow body.

According to implementations of the compressed air/pressure transmission device, it is provided that the first end region of the tubular or hose-like hollow body is designed to be received and in particular plugged in a preferably bushing-shaped or bushing-like receptacle of the first (transmission-side) cardan shaft section, wherein this preferably bushing-shaped or bushing-like receptacle is fluidically connected to the first fluid duct.

Alternatively, or additionally, it is advantageously provided that the second end region of the tubular or hose-like hollow body is designed to be received and in particular plugged in a preferably bushing-shaped or bushing-like receptacle of the second (wheel-side) cardan shaft section, wherein this preferably bushing-shaped or bushing-like receptacle is fluidically connected to the second fluid duct.

The inventive cardan shaft arrangement comprises a particularly transmission-side first cardan shaft section having a first fluid duct received or formed at least in regions in the interior and a particularly wheel-side second cardan shaft section having a second fluid duct received or formed at least in regions in the interior. The cardan shaft arrangement is characterized in that it further comprises a compressed air/pressure transmission device of the previously described nature in order to transmit compressed air or pressurized media or control and/or working pressures between the first fluid duct and the second fluid duct.

The cardan shaft arrangement preferably further comprises an articulated arrangement via which the first (transmission-side) articulation shaft section is connected in an articulated manner to the second (wheel-side) cardan shaft section, wherein the line section of the compressed air/pressure transmission device passes at least in regions through the articulated arrangement (in the interior thereof).

According to embodiments, in order to ensure as simple a mounting as possible of the cardan shaft arrangement, it is provided that a bushing-shaped or bushing-like receptacle is preferably provided at an end region of the first (transmission-side) cardan shaft section, in which receptacle a first end region of the tubular or hose-like hollow body of the compressed air/pressure transmission device is received. In particular, the preferably bushing-shaped or bushing-like receptacle can be configured such that the first end region of the tubular or hose-like hollow body can be inserted into the receptacle. The receptacle is further fluidically connected to the first fluid duct formed in the transmission-side cardan shaft section.

Preferably, the receptacle comprises a self-centering which, when the first end region of the tubular or hose-like hollow body is inserted, aligns said region relative to the first fluid duct.

The same is true in the transferred sense for the second (wheel-side) cardan shaft section, which at one end region comprises a preferably bushing-shaped or bush-like receptacle, which is fluidly connected to the fluid duct formed in the second cardan shaft section and which is configured in order to connect a second end region of the tubular or hose-like hollow body of the compressed air/pressure transmission device according to the principle of a bushing/plug arrangement and, in doing so, to preferably also center and/or seal it at the same time.

The invention is described in more detail below with reference to the accompanying drawings.

The following are shown:
- FIG. 1: schematically and in a top plan view, an example of a drive shaft (overall) of a wheel drive for a steered and driven vehicle wheel;
- FIG. 2a: schematically, a cross-sectional view along line A-A in FIG. 1 of the example of the drive shaft, wherein a rotational transmission device associated with the drive shaft is provided in order to transmit a pressurized medium, in particular compressed air, to the drive shaft as needed;
- FIG. 2b: schematically, a cross-sectional view along line B-B in FIG. 2a;
- FIG. 3: schematically, a detailed view of FIG. 2b with respect to the fluidic connection in the articulated head of the drive shaft embodied as a cardan shaft;
- FIG. 4a: a first exemplary embodiment, in accordance with the invention, of the compressed air/pressure transmission device for transmitting pressurized media, in particular compressed air or control and/or working pressures, in the articulated head of the drive shaft embodied as a cardan shaft according to FIG. 1;
- FIG. 4b: schematically, a detailed view of FIG. 4a;
- FIG. 5a: a further (second) exemplary embodiment of the compressed air/pressure transmission device for transmitting pressurized media, in particular compressed air or control and/or working pressures, in the articulated head of the drive shaft embodied as a cardan shaft according to FIG. 1; and
- FIG. 5b: schematically, a detailed view of FIG. 5a.

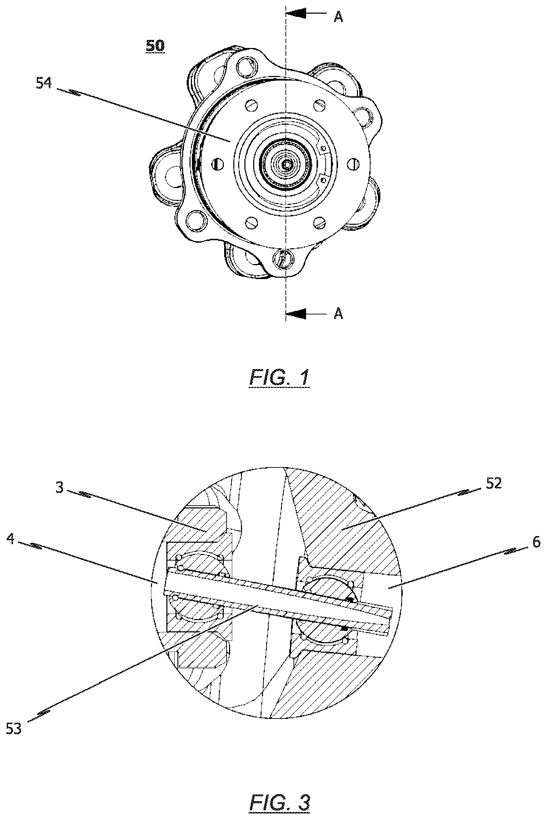

Referring now to the illustrations in FIG. 1, FIG. 2a, FIG. 2b, and FIG. 3, an example of a drive shaft 50 equipped with a rotational transmission device 1 is first described. The rotational transmission device 1 serves to transmit, as needed, a pressurized medium, such as compressed air, to a fluid duct 51 received or formed in the drive shaft 50.

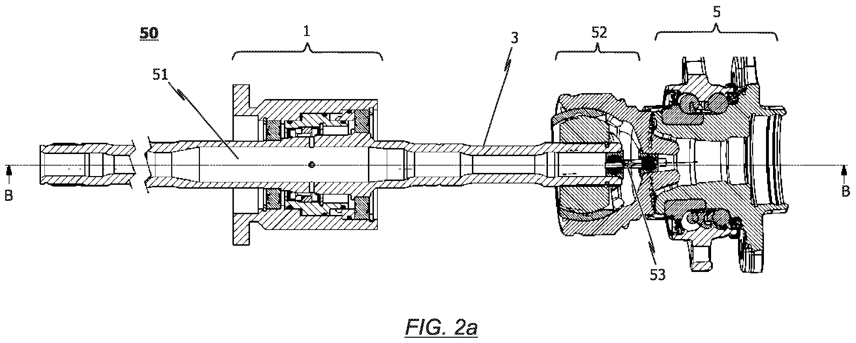

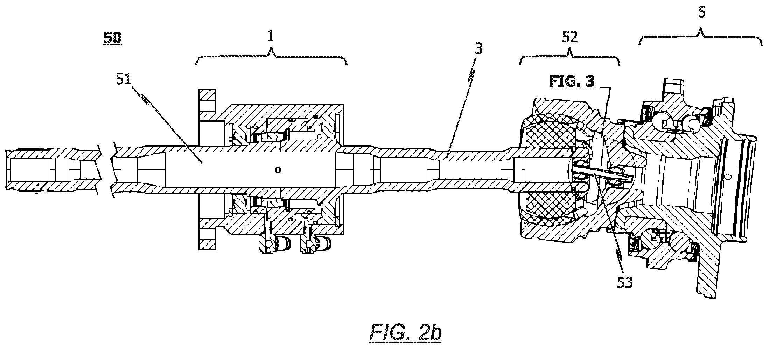

The drive shaft 50 shown in FIG. 1 and FIG. 2a and FIG. 2b is, in particular, a drive shaft 50 of a wheel drive for a steered and driven vehicle wheel 54.

The drive shaft 50 comprises a first transmission-side or axle-side shaft, which is also referred to as the "first transmission-side cardan shaft section 3" herein.

Furthermore, the drive shaft 50 comprises a second gear-side shaft, which is also referred to as a "second gear-side cardan shaft section 5" herein.

Between the first transmission-side or axle-side shaft or the first transmission-side cardan shaft section 3 and the second transmission-side shaft or the second wheel-side cardan shaft section 5, respectively, an articulated arrangement is in particular configured in the form of a cardan joint 52, such that the second wheel-side shaft 5 can be deflected relative to the first transmission-side or axle-side shaft 3.

Because such a drive shaft 50 requires the steering axle of the wheel to be as close as possible to the wheel plane so that the steering rolling radius is kept as low as possible, there is a certain space problem with respect to the rotational transmission device 1 as well as with respect to the components associated with the rotational transmission device 1, which serve to supply a pressurized medium to the vehicle wheel as needed. In particular, it is therefore necessary for such drive shafts 50 for a steered and driven vehicle wheel 54 to provide a particularly compactly designed system having a rotational transmission device 1 which is designed to be as wear-free as possible, in general.

The rotational transmission device 1, as shown together with the drive shaft 50 in the drawings, can in particular be part of a tire pressure control system of a vehicle, in particular of a motor vehicle.

The rotational transmission device 1 shown schematically in FIG. 2a and FIG. 2b is mounted on and, in particular, torsionally connected to the drive shaft 50. Although not shown, the drive shaft 50 can be circumscribed by an axle housing on the vehicle side. The axle housing can, at least in regions, form a housing of a stator assembly of the rotational transmission device 1.

As already stated, the free end region of the first transmission-side cardan shaft section 3 of the drive shaft 50 is connected to the wheel assembly 54 via the aforementioned cardan joint 52 and thus serves in the transferred sense to attach one or more wheels on the drive shaft 50 so that they can be driven by the drive shaft 50.

As can be seen in the detail view in FIG. 3, in the drive shaft 50 shown therein, a rectilinear and in particular rigid fluidic connection 53 is provided in the region of the cardan joint 52 in order to fluidically connect a first fluid duct 4 received or formed in the first transmission-side cardan shaft section 3 to a second fluid duct 6 received or formed in the second wheel-side cardan shaft section 5.

During operation of the vehicle, such rigid fluidic connection 53 is subjected to particular wear, in particular due to the vibrations occurring and the relative movements between the drive-side/transmission-side cardan shaft section 3 and the wheel-side hinged shaft section 5.

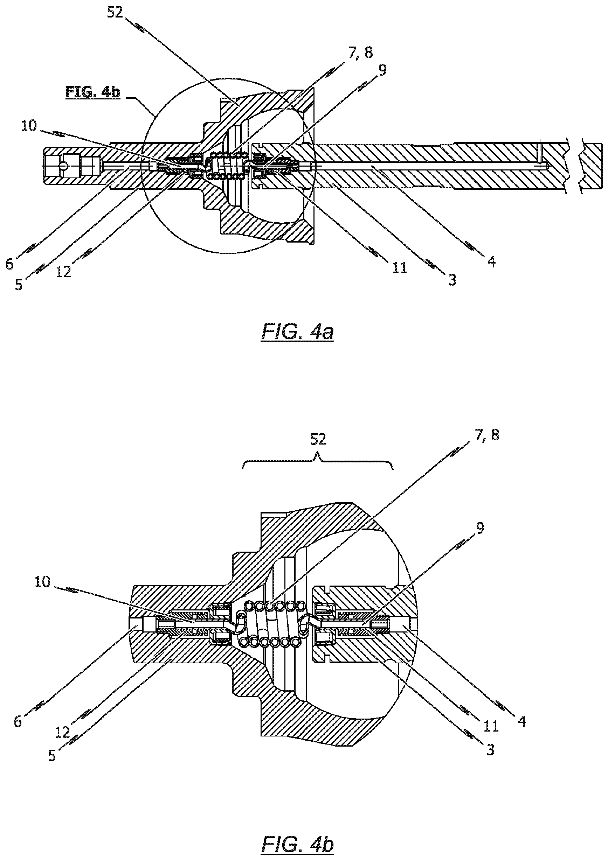

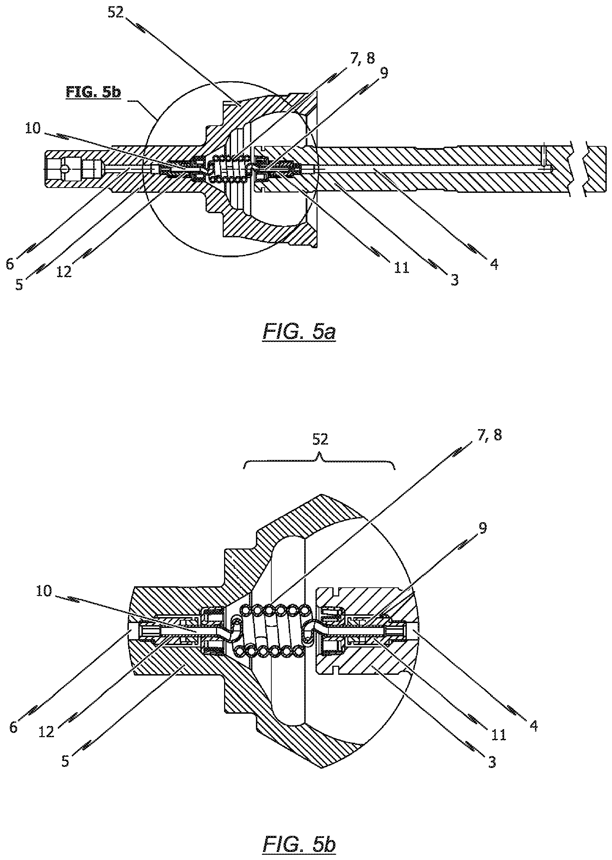

According to the present invention, in order to optimize the entire system in particular in this regard, a compressed air/pressure transmission device is provided, wherein exemplary embodiments hereof are described hereinafter with reference to the illustrations in FIGS. 4a, 4b and in FIGS. 5a, 5b.

In general terms, the embodiments of the compressed air/pressure transmission device shown schematically in FIGS. 4 and 5 serve to [transmit], as needed, the compressed air or pressurized media or control and/or working pressures between a first fluid duct 4 received or formed at least in regions in the interior of a first, in particular transmission-side, cardan shaft section 3 to a second fluid duct 6 received or formed at least in regions in the interior of a second, in particular transmission-side, cardan shaft section 5 that is connected in an articulated manner to an end region of the first cardan shaft section 3.

By contrast to the example shown schematically in FIG. 3, the embodiments of the compressed air/[pressure] transmission device shown schematically in FIG. 4 and FIG. 5 are characterized in that the line section 7 of the compressed air/[pressure] transmission device, which fluidically connects the first fluid duct 4 of the transmission-side cardan shaft section 3 to the second fluid duct 6 of the wheel-side cardan shaft section 5, is reversibly variable in terms of its length.

Due to this achievable flexibility, the line section 7 is on the one hand much easier to assemble and on the other hand less prone to wear.

As can be seen in FIG. 4 and FIG. 5, and in particular in the corresponding detailed views, in the embodiments provided in the drawings, the line section 7 is embodied at least in regions as a tubular or hose-like hollow body 8, wherein the tubular or hose-like hollow body 8 of the line section 7 runs at least in regions along a screw-like or helical line.

Although not shown in the drawings, it is also alternatively conceivable that the tubular or hose-like hollow body 8 of the line section 7 runs at least in regions along a spiral line. The line section 7 could also have a telescope-like structure.

Overall, it should be noted the tubular or hose-like hollow body 8 of the line section 7 comprises a first end region 9, which runs at least substantially rectilinearly, and an opposite second end region 10, which also preferably runs substantially rectilinearly, wherein the tubular or hose-like hollow body 8 is in particular configured in such a way that the second end region 10 can be reversibly offset and/or deflected relative to the first end region 9.

However, if - as shown in FIG. 4 and FIG. 5 - the tubular or hose-like hollow body 8 is present in its neutral position, it lends itself that the first preferably rectilinear end region 9 and the second preferably rectilinear end region 10 of the tubular or hose-like hollow body 8 are arranged concentrically with respect to one another.

As can be seen in particular from the detail views in FIG. 4b and FIG. 5b, a bushing-shaped or bushing-like receptacle 11 is provided at an end region of the first (transmission/drive-side) cardan shaft section 3, in which the first end region 9 of the tubular or hose-like hollow body 8 is received, in particular in a self-centering manner, and held therein accordingly.

It is conceivable that the first end region 9 of the tubular or hose-like hollow body 8 can be fixedly connected to the preferably bushing-shaped or bushing-like receptacle 11 of the first cardan shaft section 3. However, alternatively, a sliding bearing is also conceivable, for example.

In particular, the preferably bushing-shaped or bushing-like receptacle 11 of the first cardan shaft section 3 should have a self-centering function in order to simplify the assembly of the tubular or hose-like hollow body 8, because only the first end region 9 of the tubular or hose-like hollow body 8 must then be inserted into the receptacle 11 and, if necessary, fixed therein.

Furthermore, it is preferred that the preferably bushing-shaped or bushing-like receptacle 11 of the first cardan shaft section 3 has a self-sealing function in order to prevent fluid leakage during air pressure/pressure transmission via the tubular or hose-like hollow body 8.

Likewise, it is preferred that such a bushing-shaped or bushing-like receptacle 12 is also provided at an end region of the second (wheel-side) cardan shaft section 5, in which a second end region 10 of the tubular or hose-like hollow body 8 of the compressed air/[pressure] transmission device is then received. Here, too, it lends itself that the preferably bushing-shaped or bushing-like receptacle 12 is configured to be self-centering and/or self-sealing.

As with the bushing-shaped or bushing-like receptacle 11 associated with the first cardan shaft section 3, the bushing-shaped or bushing-like receptacle 12 associated with the second cardan shaft section 5 can preferably be designed in order to receive the second end region 10 of the tubular or hose-like hollow body 8 such that the second end region 10 is fixed relative to the receptacle 12 or the second cardan shaft section 5 or is rotatably supported about the longitudinal axis of the second cardan shaft section 5 relative thereto.

The drive shaft 50, which is embodied for example as a hollow or partial hollow shaft, can have any number of channel guides or fluid ducts.

Any fluid duct of drive shaft 50 running parallel to the axis of rotation of drive shaft 50 can have any number of branch ducts to the drive shaft surface, wherein all branch ducts located in the region of the stator assembly "sees" the same control pressure. The outer contour (topology) of the drive shaft 50 is created such that the drive shaft 50 has sealing portions in the region of transmission relative to the axis of rotation. A sealing section is a section delimited by two seals, in particular sealing lips, or by rotationally symmetrical material aggregates on the longitudinal axis of the drive shaft 50.

The invention is not limited to the embodiments shown in the drawings, but rather results from the scope of the appended claims.

## Claims

1. A cardan shaft arrangement of a vehicle axle,
wherein the cardan shaft arrangement has the following:
- an in particular transmission-side first cardan shaft section (3) with a first fluid duct (4) which is received or formed at least in regions in the interior;
- an in particular wheel-side second cardan shaft section (5) with a second fluid duct (6) which is received or formed at least in regions in the interior; and
- a device for transmitting pressurized media, in particular compressed air, or control and/or working pressures between the first fluid duct (4) and the second fluid duct (6), wherein the device has a line section (7) which is fluidically connected to, or can be brought into fluidic connection with, the first and the second fluid duct (4, 6) and the length of which is reversibly changeable,
wherein the line section (7) has a tubular or hose-like hollow body (8) with a first, preferably at least substantially rectilinearly running end region (9) and an opposite, second, preferably at least substantially rectilinearly running end region (10), wherein the tubular or hose-like hollow body (8) is designed in such a manner that the second end region (10) can be arranged offset and/or deflected in a reversible manner relative to the first end region (9), **characterised in that** the tubular or hose-like hollow body (8) is designed in such a manner that, in a state in which the first and second end region (9, 10) are not offset and deflected with respect to each other, the first end region (9) is arranged concentrically with respect to the second end region (10), wherein the line section (7) has a tubular or hose-like hollow body (8) which runs at least in regions along a screw-like or helical line, or
wherein the line section (7) has a tubular or hose-like hollow body (8) which runs at least in regions along a spiral line.

2. The cardan shaft arrangement as claimed in claim 1,
wherein the cardan shaft arrangement furthermore has a joint arrangement in particular in the form of a cardan joint (52), via which the first cardan shaft section (3) is connected in an articulated manner to the second cardan shaft section (5), wherein the line section (7) of the device for transmitting pressurized media, in particular compressed air, or control and/or working pressures runs at least in regions through the joint arrangement.

3. The cardan shaft arrangement as claimed in claim 1 or 2,
wherein an end region of the first cardan shaft section (3) is provided with a preferably bushing-shaped or bushing-like receptacle (11) in which a first end region (9) of the tubular or hose-like hollow body (8) of the device for transmitting pressurized media, in particular compressed air, or control and/or working pressures is received.

4. The cardan shaft arrangement as claimed in claim 3,
wherein the preferably bushing-shaped or bushing-like receptacle (11) is designed to receive the first end region (9) of the tubular or hose-like hollow body (8) of the device for transmitting pressurized media, in particular compressed air, or control and/or working pressures in an in particular self-centering manner; and/or
wherein the preferably bushing-shaped or bushing-like receptacle (11) is designed to receive the first end region (9) of the tubular or hose-like hollow body (8) of the device for transmitting pressurized media, in particular compressed air, or control and/or working pressures in an in particular self-sealing manner.

5. The cardan shaft arrangement as claimed in claim 3 or 4,
wherein the preferably bushing-shaped or bushing-like receptacle (11) is designed to receive the first end region (9) of the tubular or hose-like hollow body (8) of the device for transmitting pressurized media, in particular compressed air, or control and/or working pressures in a fixed manner with respect to the end region of the first cardan shaft section (3) or in a manner permitting a rotational movement.

6. The cardan shaft arrangement as claimed in one of claims 3 to 5,
wherein the preferably bushing-shaped or bushing-like receptacle (12) is designed to receive the second end region (10) of the tubular or hose-like hollow body (8) of the device for transmitting pressurized media, in particular compressed air, or control and/or working pressures in a fixed manner with respect to the end region of the second cardan shaft section (5) or in a manner permitting a rotational movement.

7. A tire pressure adjustment system for at least one wheel,
which is driven in a rotating manner relative to a vehicle body, of a wheeled vehicle with pneumatic tires, with at least one cardan shaft arrangement as claimed in one of claims 1 to 6 for driving the wheel.

## Patentansprüche

1. Kardanwellenanordnung einer Fahrzeugachse,
wobei die Kardanwellenanordnung Folgendes aufweist:
- einen insbesondere getriebeseitigen ersten Kardanwellenabschnitt (3) mit einem ersten Fluidkanal (4), der zumindest in Bereichen in dem Inneren aufgenommen oder ausgebildet ist;
- einen insbesondere radseitigen zweiten Kardanwellenabschnitt (5) mit einem zweiten Fluidkanal (6), der zumindest in Bereichen in dem Inneren aufgenommen oder ausgebildet ist; und
- eine Vorrichtung zum Weiterleiten von unter Druck stehenden Medien, insbesondere von Druckluft, oder von Steuer- und/oder Arbeitsdrücken zwischen dem ersten Fluidkanal (4) und dem zweiten Fluidkanal (6), wobei die Vorrichtung einen Leitungsabschnitt (7) aufweist, der mit dem ersten und dem zweiten Fluidkanal (4, 6) fluidisch verbunden ist oder in fluidische Verbindung mit diesen gebracht werden kann und dessen Länge reversibel veränderbar ist,
wobei der Leitungsabschnitt (7) einen rohr- oder schlauchartigen Hohlkörper (8) mit einem ersten, vorzugsweise zumindest im Wesentlichen geradlinig verlaufenden Endbereich (9) und einem gegenüberliegenden zweiten, vorzugsweise zumindest im Wesentlichen geradlinig verlaufenden Endbereich (10) aufweist, wobei der rohr- oder schlauchartige Hohlkörper (8) derart ausgelegt ist, dass der zweite Endbereich (10) relativ zu dem ersten Endbereich (9) auf reversible Weise versetzt angeordnet und/oder ausgelenkt werden kann, **dadurch gekennzeichnet, dass**
der rohr- oder schlauchförmige Hohlkörper (8)
derart ausgelegt ist, dass in einem Zustand, in dem der erste und der zweite Endbereich (9, 10) nicht versetzt und gegeneinander ausgelenkt sind, der erste Endbereich (9) konzentrisch in Bezug auf den zweiten Endbereich (10) angeordnet ist, wobei der Leitungsabschnitt (7) einen rohr- oder schlauchartigen Hohlkörper (8) aufweist, der zumindest in Bereichen entlang einer schrauben- oder wendelförmigen Linie verläuft, oder
wobei der Leitungsabschnitt (7) einen rohr- oder schlauchförmigen Hohlkörper (8) aufweist, der zumindest in Bereichen entlang einer Spirallinie verläuft.

2. Kardanwellenanordnung nach Anspruch 1,
wobei die Kardanwellenanordnung ferner eine Gelenkanordnung insbesondere in Form eines Kardangelenks (52) aufweist, über das der erste Kardanwellenabschnitt (3) auf eine gelenkige Weise mit dem zweiten Kardanwellenabschnitt (5) verbunden ist, wobei der Leitungsabschnitt (7) der Vorrichtung zum Weiterleiten von unter Druck stehenden Medien, insbesondere Druckluft, oder Steuer- und/oder Arbeitsdrücken zumindest in Bereichen durch die Gelenkanordnung verläuft.

3. Kardanwellenanordnung nach Anspruch 1 oder 2,
wobei ein Endbereich des ersten Kardanwellenabschnitts (3) mit einer vorzugsweise buchsenförmigen oder buchsenartigen Aufnahme (11) versehen ist, in der ein erster Endbereich (9) des rohr- oder schlauchartigen Hohlkörpers (8) der Vorrichtung zum Weiterleiten von unter Druck stehenden Medien, insbesondere Druckluft, oder Steuer- und/oder Arbeitsdrücken aufgenommen ist.

4. Kardanwellenanordnung nach Anspruch 3,
wobei die vorzugsweise buchsenförmige oder buchsenartige Aufnahme (11) zur Aufnahme des ersten Endbereichs (9) des rohr- oder schlauchartigen Hohlkörpers (8) der Vorrichtung zum Weiterleiten von unter Druck stehenden Medien, insbesondere Druckluft, oder Steuer- und/oder Arbeitsdrücken auf insbesondere selbstzentrierende Weise ausgelegt ist; und/oder
wobei die vorzugsweise buchsenförmige oder buchsenartige Aufnahme (11) zur Aufnahme des ersten Endbereichs (9) des rohr- oder schlauchförmigen Hohlkörpers (8) der Vorrichtung zum Weiterleiten von unter Druck stehenden Medien, insbesondere Druckluft, oder von Steuer- und/oder Arbeitsdrücken, insbesondere auf selbstdichtende Weise ausgelegt ist.

5. Kardanwellenanordnung nach Anspruch 3 oder 4,
wobei die vorzugsweise buchsenförmige oder buchsenartige Aufnahme (11) zur Aufnahme des ersten Endbereichs (9) des rohr- oder schlauchförmigen Hohlkörpers (8) der Vorrichtung zum Weiterleiten von unter Druck stehenden Medien, insbesondere Druckluft, oder von Steuer- und/oder Arbeitsdrücken auf eine feste Weise in Bezug auf den Endbereich des ersten Kardanwellenabschnitts (3) oder auf eine Weise, die eine Drehbewegung ermöglicht, ausgelegt ist.

6. Kardanwellenanordnung nach einem der Ansprüche 3 bis 5,
wobei die vorzugsweise buchsenförmige oder buchsenartige Aufnahme (12) zur Aufnahme des zweiten Endbereichs (10) des rohr- oder schlauchförmigen Hohlkörpers (8) der Vorrichtung zum Weiterleiten von unter Druck stehenden Medien, insbesondere Druckluft, oder von Steuer- und/oder Arbeitsdrücken auf eine feste Weise in Bezug auf den Endbereich des zweiten Kardanwellenabschnitts (5) oder auf eine Weise, die eine Drehbewegung ermöglicht, ausgelegt ist.

7. Reifendruckeinstellsystem für zumindest ein Rad,
das relativ zu einer Fahrzeugkarosserie auf eine drehbare Weise angetrieben wird, eines Radfahrzeugs mit Luftreifen mit zumindest einer Kardanwellenanordnung nach einem der Ansprüche 1 bis 6 zum Antreiben des Rads.

## Revendications

1. Agencement d'arbre à cardan d'un essieu de véhicule,
dans lequel l'agencement d'arbre à cardan a les éléments suivants :
- une première section d'arbre à cardan (3), en particulier côté transmission, comportant un premier conduit de fluide (4) qui est reçu ou formé au moins dans des régions à l'intérieur ;
- une deuxième section d'arbre à cardan (5), en particulier côté roue, comportant un deuxième conduit de fluide (6) qui est reçu ou formé au moins dans des régions à l'intérieur ; et
- un dispositif destiné à transmettre un fluide sous pression, en particulier de l'air comprimé, ou des pressions de commande et/ou de travail entre le premier conduit de fluide (4) et le deuxième conduit de fluide (6), le dispositif ayant une section de conduite (7) qui est reliée fluidiquement, ou peut être mise en liaison fluidique avec le premier et le deuxième conduit de fluide (4, 6) et dont la longueur peut être modifiable de manière réversible,
dans lequel la section de conduite (7) a un corps creux tubulaire ou de type flexible (8) avec une première région d'extrémité (9) de préférence en extension au moins sensiblement rectiligne et une deuxième région d'extrémité (10) de préférence en extension au moins sensiblement rectiligne opposée, le corps creux tubulaire ou de type flexible (8) étant conçu de telle sorte que la deuxième région d'extrémité (10) peut être agencée décalée et/ou déviée de manière réversible par rapport à la première région d'extrémité (9), **caractérisé en ce que**
le corps creux tubulaire ou de type flexible (8) est
conçu de telle sorte que, dans un état dans lequel les première et deuxième régions d'extrémité (9, 10) ne sont pas décalées et déviées l'une par rapport à l'autre, la première région d'extrémité (9) est agencée de manière concentrique par rapport à la deuxième région d'extrémité (10), dans lequel la section de conduite (7) a un corps creux tubulaire ou de type flexible (8), qui s'étend au moins dans des régions le long d'une ligne de type à vis ou hélicoïdale, ou
dans lequel la section de conduite (7) a un corps creux tubulaire ou de type flexible (8) qui s'étend au moins dans des régions le long d'une ligne en spirale.

2. Agencement d'arbre à cardan selon la revendication 1,
dans lequel l'agencement d'arbre à cardan a en outre un agencement de joint, en particulier sous la forme d'un joint de cardan (52), par l'intermédiaire duquel la première section d'arbre à cardan (3) est reliée de manière articulée à la deuxième section d'arbre à cardan (5), dans lequel la section de conduite (7) du dispositif destiné à transmettre un fluide sous pression, en particulier de l'air comprimé, ou des pressions de commande et/ou de travail s'étend au moins dans des régions à travers l'agencement d'articulation.

3. Agencement d'arbre à cardan selon la revendication 1 ou 2,
dans lequel une région d'extrémité de la première section d'arbre à cardan (3) est munie d'un réceptacle (11) de préférence en forme de douille ou de type douille dans lequel est reçue une première région d'extrémité (9) du corps creux tubulaire ou de type flexible (8) du dispositif destiné à transmettre un fluide sous pression, en particulier de l'air comprimé, ou des pressions de commande et/ou de travail.

4. Agencement d'arbre à cardan selon la revendication 3,
dans lequel le réceptacle (11) de préférence en forme de douille ou de type douille est conçu pour recevoir la première région d'extrémité (9) du corps creux tubulaire ou de type flexible (8) du dispositif destiné à transmettre un fluide sous pression, en particulier de l'air comprimé, ou des pressions de commande et/ou de travail d'une manière en particulier autocentrée ; et/ou
dans lequel le réceptacle (11) de préférence en forme de douille ou de type douille est conçu pour recevoir la première région d'extrémité (9) du corps creux tubulaire ou de type flexible (8) du dispositif destiné à transmettre un fluide sous pression, en particulier de l'air comprimé, ou des pressions de commande et/ou de travail d'une manière en particulier autoétanche.

5. Arrangement d'arbre à cardan selon la revendication 3 ou 4,
dans lequel le réceptacle (11) de préférence en forme de douille ou de type douille est conçu pour recevoir la première région d'extrémité (9) du corps creux tubulaire ou de type flexible (8) du dispositif destiné à transmettre un fluide sous pression, en particulier de l'air comprimé, ou des pressions de commande et/ou de travail d'une manière fixe par rapport à la région d'extrémité de la première section d'arbre à cardan (3) ou d'une manière permettant un déplacement en rotation.

6. Agencement d'arbre à cardan selon l'une des revendications 3 à 5,
dans lequel le réceptacle (12) de préférence en forme de douille ou de type douille est conçu pour recevoir la deuxième région d'extrémité (10) du corps creux tubulaire ou de type flexible (8) du dispositif destiné à transmettre un fluide sous pression, en particulier de l'air comprimé, ou des pressions de commande et/ou de travail d'une manière fixe par rapport à la région d'extrémité de la deuxième section d'arbre à cardan (5) ou d'une manière permettant un déplacement en rotation.

7. Système de réglage de pression de pneumatique pour au moins une roue,
qui est entraîné en rotation par rapport à une carrosserie de véhicule, d'un véhicule à roues avec des pneumatiques, avec au moins un agencement d'arbre à cardan selon l'une des revendications 1 à 6 destiné à entraîner la roue.
